(19) Europäisches Patentamt
European Patent Office
Office européen des brevets

(11) **EP 4 600 889 A1**

(12) **EUROPEAN PATENT APPLICATION**

(43) Date of publication:
**13.08.2025 Bulletin 2025/33**

(21) Application number: **25151402.2**

(22) Date of filing: **13.01.2025**

(51) International Patent Classification (IPC):
**G06Q 30/0201** (2023.01)    **G06Q 30/016** (2023.01)
**G06Q 30/01** (2023.01)

(52) Cooperative Patent Classification (CPC):
**G06Q 30/0201; G06Q 30/01; G06Q 30/016**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **12.02.2024 US 202418439720**

(71) Applicant: **Schneider Electric USA, Inc.
Andover, MA 01810 (US)**

(72) Inventors:
• **SAHA, Nilanjan
  Andover, MA 01810 (US)**
• **KUMAR, Gattupalli Sai
  Andover, MA 01810 (US)**
• **N, Deepthi
  Andover, MA 01810 (US)**
• **RAZA, Anam Armaan
  Andover, MA 01810 (US)**

(74) Representative: **Manitz Finsterwald
Patent- und Rechtsanwaltspartnerschaft mbB
Martin-Greif-Straße 1
80336 München (DE)**

(54) **IMPROVING CUSTOMER NET SATISFACTION SCORE ON DELIVERY USING MACHINE LEARNING**

(57)    Systems/methods for deriving insight from delivery KPI data uses machine learning to improve customer NSSoD. The systems/methods group customers into clusters based on their delivery experience, then correlates the NSSoD from customers in a cluster with their delivery related KPIs to identify high impacting KPIs for a customer. The delivery related KPIs may be a predefined set of KPIs selected as needed for a particular application. The systems/methods generate a customer specific KPI score based on KPI data for the most recent month for the customer and historical KPI data over the past 12 months for the entire cluster for the predefined set of KPIs. The use of historical KPI data provides a larger set of data on which to perform analysis, thereby offering more accurate insight. The above approach allows companies to focus on specific delivery KPIs within a cluster that are likely to increase the NSSoD.

**EP 4 600 889 A1**

**Description**

TECHNICAL FIELD

The present disclosure relates to techniques for improving customer satisfaction through the use machine learning, and particularly to systems and methods that use machine learning to derive insight from key performance indicators (KPI) for improving customer Net Satisfaction Score on Delivery (NSSoD).

BACKGROUND

Net Satisfaction Score on Delivery (NSSoD) is a metric often used by companies to measure customer satisfaction with the delivery of a product or service by the companies. This customer satisfaction metric can serve as a useful tool for companies to identify areas in their delivery process that can be improved to enhance customer satisfaction. One way to calculate the NSSoD for a company is through a survey wherein customers rate their experience with a particular delivery by that company on a scale of 0 to 10, with 0 indicating dissatisfied and 10 indicating satisfied. The NSSoD for the company can then be found by taking an average of the customer ratings.

The above approach, however, lumps all customers together and fails to account for the preferences of different types of customers. As customer experience forms the basis of any company's success, it is imperative that companies understand why a given customer is happy or unhappy with a given delivery experience. In particularly, companies need to be aware how changes in their internal delivery related KPIs, such as time of delivery, quantity delivered, and so on, may affect various customer perceptions. For example, a business-to-business (B2B) customer may be more concerned about customer support for a product compared to, say, on-time delivery of the product.

Accordingly, while progress has been made in the area of customer satisfaction, improvements are continually needed.

SUMMARY

Embodiments of the present disclosure provide systems and methods for deriving insight from delivery KPI data using machine learning (ML) to improve customer NSSoD. The systems and methods begin by grouping customers into clusters based on their delivery experience, then correlating the NSSoD provided by the customers in a cluster with their delivery related KPIs to thereby identify high impacting KPIs for the cluster that are likely to influence the customers within the cluster. The delivery related KPIs may be a predefined set of KPIs that may be selected as needed for a particular application. The above approach allows companies to focus on specific delivery KPIs within a cluster that are likely to increase the NSSoD for a given customer within the cluster.

In one embodiment, the systems and methods herein generate a customer specific KPI score that reflects a customer's delivery experience. This customer KPI score is calculated based on KPI data for the most recent month for the customer and historical KPI data over the past 12 months for the entire cluster for the predefined set of KPIs. The use of historical KPI data for all customers within a cluster provides a larger set of data on which to perform analysis, thereby offering more accurate insight on a customer compared to data for a single customer or small number of customers. The KPI score for each customer, which can range from -1 to +1 in some embodiments (the KPI Score formula is given later herein), serves as an indicator of a business' overall delivery performance and its impact on a customer's perception of the business. A negative KPI score indicates poor performance on the KPIs and a positive score indicates good performance.

In some embodiments, the disclosed systems and methods present the scores for each customer on a dashboard that can be displayed on any suitable display, such as a laptop, tablet, mobile device and the like. The dashboard allows a user to filter the scores according to various filters, such as on a cluster level, a segment level, a country level, and the like. The scores may also be color coded according to the score values, such that a negative score may be displayed in an appropriate shade of red, whereas a positive score may be displayed in an appropriate shade of green.

In some embodiments, the dashboard may also provide the scores and results of the analysis in the form of a Box Tree Map that displays the importance of each KPI for an individual customer, a segment of customers, and the like. The Box Tree Map visualizes the scores and results as a set of nested rectangles or "boxes" that represent certain categories within a selected dimension or parameter and are ordered in a hierarchy or "tree." The Box Tree Map represents a part-to-whole relationship that allows a user quickly to compare quantities, patterns, and other information displayed in a visually limited space. In such embodiments, the higher the importance of a KPI, the larger the area or size of the rectangles or "boxes used to display the KPI. In some embodiments, the dashboard may also highlight the top five high impacting KPIs. In some embodiments, the dashboard also has an alerting function that automatically notifies the user whenever a KPI score is negative, decreasing, or otherwise suggests a customer is being negatively impacted.

In general, in one aspect, embodiments of the present disclosure relate to a system for improving customer satisfaction. The system comprises, among other things, a processor, a display unit coupled to the processor, and a storage unit accessible by the processor. The storage unit stores an application thereon that, when executed by the processor, causes the system to obtain performance data for a predefined set of metrics for a plurality of customers, the performance data including historical performance data for the predefined set of metrics and current performance data for the predefined set of metrics. The application, when executed by the processor, also causes the system to perform an impact analysis using the historical performance data for the predefined set of metrics for the plurality of customers and current performance data for the predefined set of metrics for a selected customer, the impact analysis determining whether each metric in the predefined set of metrics has a negative impact, a positive impact, or a neutral impact on the selected customer. The application, when executed by the processor, further causes the system to perform a corrective action related to the selected customer in response to a determination that the metric has a negative impact on the selected customer.

In general, in another aspect, embodiments of the present disclosure relate to a method for improving customer satisfaction. The method comprises, among other things, obtaining performance data for a predefined set of metrics for a plurality of customers, the performance data including historical performance data for the predefined set of metrics and current performance data for the predefined set of metrics. The method also comprises performing an impact analysis using the historical performance data for the predefined set of metrics for the plurality of customers and current performance data for the predefined set of metrics for a selected customer, the impact analysis determining whether each metric in the predefined set of metrics has a negative impact, a positive impact, or a neutral impact on the selected customer. The method further comprises performing a corrective action related to the selected customer in response to a determination that the metric has a negative impact on the selected customer.

In general, in yet another aspect, embodiments of the present disclosure relate to a computer-readable medium storing computer-readable instructions thereon. The computer-readable instructions cause a processor to, among other things, obtain performance data for a predefined set of metrics for a plurality of customers, the performance data including historical performance data for the predefined set of metrics and current performance data for the predefined set of metrics. The computer-readable instructions also cause the processor to perform an impact analysis using the historical performance data for the predefined set of metrics for the plurality of customers and current performance data for the predefined set of metrics for a selected customer, the impact analysis determining whether each metric in the predefined set of metrics has a negative impact, a positive impact, or a neutral impact on the selected customer. The computer-readable instructions further cause the processor to perform a corrective action related to the selected customer in response to a determination that the metric has a negative impact on the selected customer.

In accordance with any one or more of the foregoing embodiments, the plurality of customers constitutes a cluster of customers, the cluster of customers being selected from several clusters of customers, each cluster of customers being defined by the application causing the system to perform a cluster analysis based on the historical performance data for the predefined set of metrics.

In accordance with any one or more of the foregoing embodiments, the application further causes the system to obtain historical customer net satisfaction scores for the plurality of customers, each net satisfaction score having a value within a predefined range of values, and perform a correlational analysis using the historical performance data for the predefined set of metrics and the customer net satisfaction scores, the correlational analysis providing an importance value of each metric in the predefined set of metrics.

In accordance with any one or more of the foregoing embodiments, the application further causes the system to generate a metric score for each metric in the predefined set of metrics based on the importance value for the metric and the impact of the metric on the selected customer.

In accordance with any one or more of the foregoing embodiments, the application further causes the system to generate a customer score for the selected customer based on a sum of metric scores for the predefined set of metrics and a sum of importance values for the predefined set of metrics, the customer score providing an indication of a likelihood that the selected customer will increase or decrease its net satisfaction score based on the current performance data for the predefined set of metrics.

In accordance with any one or more of the foregoing embodiments, the application further causes the system to generate one or more interactive display screens based on the cluster analysis, the correlational analysis, the impact analysis, and the customer scores, the one or more interactive display screens allowing a user to selectively display a result of the cluster analysis, the correlational analysis, the impact analysis, and/or the customer scores.

In accordance with any one or more of the foregoing embodiments, the one or more interactive display screens displays the impact analysis using boxes having different colors and/or different sizes.

BRIEF DESCRIPTION OF THE DRAWINGS

FIG. 1 illustrates an exemplary system for monitoring customer satisfaction in accordance with embodiments of the present disclosure;

FIG. 2 illustrates an exemplary delivery KPI analysis and alert system, and application thereon, in accordance with embodiments of the present disclosure;

FIG. 3 illustrates an exemplary ML-based process that may be employed by the delivery KPI analysis and alert application in accordance with embodiments of the present disclosure;

FIG. 4 illustrates an exemplary high-level flow diagram for a delivery KPI analysis and alert application in accordance with embodiments of the present disclosure;

FIG. 5 illustrates exemplary scores and results produced by a delivery KPI analysis and alert application in accordance with embodiments of the present disclosure;

FIG. 6 illustrates an exemplary interactive dashboard for displaying the scores and results produced by a delivery KPI analysis and alert application in accordance with embodiments of the present disclosure;

FIG. 7 illustrates an exemplary segment level performance screen for displaying the scores and results produced by a delivery KPI analysis and alert application in accordance with embodiments of the present disclosure; and

FIG. 8 illustrates an exemplary segment breakup by KPI screen for displaying the scores and results produced by a delivery KPI analysis and alert application in accordance with embodiments of the present disclosure;

FIG. 9 illustrates an exemplary customer level dashboard screen for displaying the scores and results produced by a delivery KPI analysis and alert application in accordance with embodiments of the present disclosure;

FIG. 10 illustrates an exemplary customer breakup by KPI screen for displaying the scores and results produced by a delivery KPI analysis and alert application in accordance with embodiments of the present disclosure;

FIG. 11 illustrates an exemplary top 10 customers by country screen for displaying the scores and results produced by a delivery KPI analysis and alert application in accordance with embodiments of the present disclosure; and

FIG. 12 illustrates an exemplary method that may be used by or with a delivery KPI analysis and alert application in accordance with embodiments of the present disclosure.

## DETAILED DESCRIPTION

This description and the accompanying drawings illustrate exemplary embodiments of the present disclosure and should not be taken as limiting, with the claims defining the scope of the present disclosure, including equivalents. Various mechanical, compositional, structural, electrical, and operational changes may be made without departing from the scope of this description and the claims, including equivalents. In some instances, well-known structures and techniques have not been shown or described in detail so as not to obscure the disclosure. Further, elements and their associated aspects that are described in detail with reference to one embodiment may, whenever practical, be included in other embodiments in which they are not specifically shown or described. For example, if an element is described in detail with reference to one embodiment and is not described with reference to a second embodiment, the element may nevertheless be claimed as included in the second embodiment.

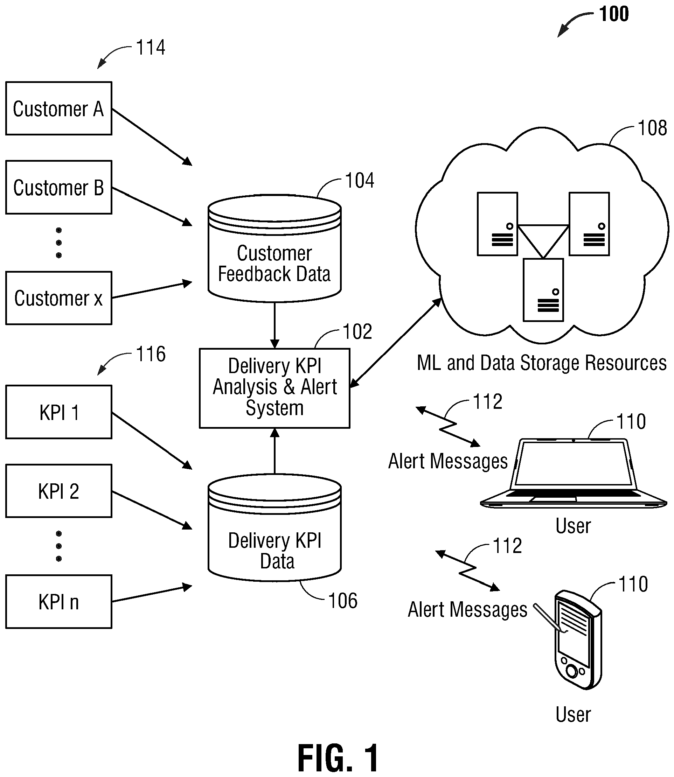

Referring now to FIG. 1, a system 100 is shown that can be used by companies and businesses to monitor customer satisfaction according to embodiments of the present disclosure. The customer satisfaction monitoring system 100 depicted here can be used by businesses to monitor various areas of customer satisfaction, such as pricing, quality control, ease-of-use, and the like, but is set up specifically to monitor customer satisfaction on delivery of products and/or services. The customer satisfaction monitoring system 100 applies ML techniques to historical NSSoD survey data and actual customer experience data to identify specific customers and key KPIs that influence customer satisfaction for those customers, thereby leading to improved NSSoD scores. This allows businesses to develop mitigation plans that address specific customers and KPIs for those customers.

As FIG. 1 shows, the customer satisfaction monitoring system 100 includes a delivery KPI analysis and alert system 102, a customer feedback database 104, an internal delivery KPI database 106, and ML and data storage resources, generally indicated at 108. The delivery KPI analysis and alert system 102 is coupled to receive customer feedback data from the database 104 and also coupled to receive internal delivery KPI data from the database 106. These databases 104, 106 may reside on a private enterprise network, or the databases 104, 106 may be hosted on the ML and data storage resources 108, or a combination of both options. Thereafter, the delivery KPI analysis and alert system 102 uses machine learning resources from, for example, the ML and data storage resources 108, to analyze the customer feedback data and the delivery KPI data to derive insight for improving customer NSSoD. Such a delivery KPI analysis and alert system 102 may be used by businesses to monitor customer satisfaction on product and/or service delivery, and issue warnings and alerts to one or more users 110 as needed over a wired or wireless communication link 112.

In some embodiments, the customer feedback data in the customer feedback database 104 may include various types of feedback from customers and potential customers. Examples of customers from which feedback may be obtained are generally indicated at 114 and may include business-to-business (B2B) companies, business-to-end-customer (B2C) companies, wholesale and retail distributors, general contractors and subcontractors, panel builders, original equipment manufacturers (OEM), system integrators, end users, and the like. The customer feedback data may include responses to general or specific questions, numerical ratings (e.g., 0 to 10), NSSoD scores, free-form natural language feedback, as well as other suitable feedback known to those skilled in the art. The customer feedback data may be provided directly by the customers, or the feedback data may be obtained from a third-party aggregator of such data.

In some embodiments, the internal KPI data in the delivery KPI database 106 may be data for a predefined set of internal delivery KPIs tracked by a business. The particular internal delivery KPIs in the predefined set of KPIs may vary depending on the type of business. Data for individual KPIs may be in the form of a percentage ranging from 0 to 100 or a corresponding decimal value, or the data may represent an average or other numerical representation, depending on the KPIs. An exemplary set of internal delivery KPIs is generally indicated at 116 and may include: Actual Lead Time for Made to Stock (MTS), Actual Lead Time for Made to Order (MTO), On-time @CRD (Customer Requested Date), On-Time at Customer Door, On-time and Early Delivery at Customer Door; Order placement details in mySE Line and EDI Line; Number of Reschedules (NoR); Actual Second Commitment Date (AC2); Complete Order Shift Particulars; delivery capabilities such as Express Line, Forwards Order Line, Kitting Line; Large Order Quantity (LOQ); Order Grouping Line, Plant to Customer Line, Precision Delivery Line; and Customer Care Centre (CCC) cases recorded on Bridge Front Office (BFO) for Information (Customer asks CCC for information), Issues (refers to missing documentation or delivery issue), and Number of Customer Visits made.

As for the ML and data storage resources 108, such resources may be private enterprise computing resources, publicly available cloud-based resources, and/or any other suitable resources that can provide data storage and execution of machine learning models and algorithms. Examples of suitable ML and data storage resources 108 may be any of the cloud-based offerings from Amazon (i.e., Amazon Web services), Microsoft (i.e., Microsoft Azure), Google (i.e., Google Cloud), and the like.

In accordance with embodiments of the disclosure, the delivery KPI analysis and alert system 102 may use the ML and data storage resources 108 to analyze and process the customer feedback data in the database 104 and the delivery KPI data in the database 106 as discussed further herein. Among other things, this allows the delivery KPI analysis and alert system 102 to identify and cluster similar groups of customers based on their delivery experience, as reflected by the internal delivery KPI data. The analysis and alert system 102 can then provide insights on the importance of each delivery KPI to a given customer, and derive a KPI score (also called a customer perception score) for a given customer. The KPI score for a given customer may be obtained using the KPI data for the current month for that customer and the KPI data for the previous 12 months (i.e., historical data) for the cluster to which the customer belongs. Such an arrangement ensures that the KPI score for a given customer closely corresponds to the preferences for the respective cluster and the impact on the overall NSSOD.

In the foregoing embodiments, if the difference between the current KPI data for a given customer and historical KPI data (e.g., previous 12 months) for the cluster exceeds a certain threshold value or range, the delivery KPI analysis and alert system 102 may issue an alert to the one or more users 110 to notify and request the users 110 to take appropriate corrective action. The alerts may be sent via the wired or wireless connection 112 to a computing device of the users 110, such as a phone, tablet, or other mobile device, or a laptop, desktop, or other computing device. In some embodiments, the delivery KPI analysis and alert system 102 may also automatically perform one or more actions instead of, or in addition to, requesting the users 110 perform the corrective actions. Examples of actions that may be automatically performed by the analysis and alert system 102 include requiring a user 110 to manually acknowledge an alert for a customer. For example, the delivery KPI analysis and alert system 102 may lock out certain user privileges with respect to the customer, such as access to the customer's account, or disable order entry for the customer, until the user 110 take steps to clear an alert flag for the customer.

It should be noted that although the systems and methods herein are described with respect to delivery KPIs, embodiments of the present disclosure are not so limited. In general, the principles and teachings disclosed herein are applicable to any performance metrics that can affect customer satisfaction. Examples of non-delivery KPI performance metrics include customer query response time, frequency of contact with customers, frequency of customer social media postings, targeted customer advertising expenditures, and the like.

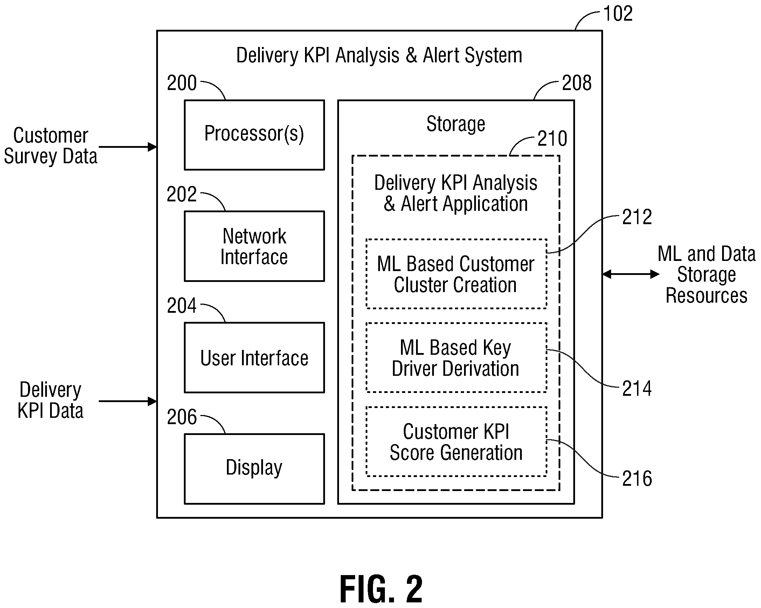

FIG. 2 shows the delivery KPI analysis and alert system 102 in more detail according to some embodiments. The analysis and alert system 102 in this example has a processing unit 200 that includes at least one processor, a network interface 202, a user interface 204, a display unit 206, and a storage unit 208, among other components. Operation of these components is generally well known and only a brief description is provided here for economy. In general, the processing unit 200 is responsible for overall operation of the analysis and alert system 102, including various complex processing operations, data capture and storage operations, corrective action operations, and the like. The network interface 202 allows the analysis and alert system 102 to communicate with external systems, including local systems that are on premise as well as network systems like the cloud-based ML and data storage resources 108. The user interface 204 allows one or more users 110 to use or otherwise interact with the analysis and alert system 102, while the display unit 206 displays graphics, images, videos, and other media content for the analysis and alert system 102. The storage unit 208 meanwhile stores operational software and data used by and with the processing unit 200 to perform the various operations mentioned above, and other functions.

The storage unit 208 in this example may be any non-transitory storage unit known to those skilled in the art, including volatile memory (e.g., RAM), nonvolatile memory (e.g., Flash), magnetic memory, optical memory, and the like. This storage unit 208 stores a plurality of applications thereon that may be run by the processing unit 200. These applications may include a delivery KPI analysis and alert application 210, or rather the computer-readable instructions therefor, in some embodiments. The analysis and alert application 210 may contain several functional components, such as an ML-based customer cluster creation component 212, an ML-based key driver derivation component 214, and a customer KPI score generation component 216. The customer cluster creation component 212, as the name suggests, may employ an ML-based process to identify and cluster similar groups of customers based on the delivery KPI therefor. The key driver derivation component 214 may employ an ML-based process to determine an importance of each KPI for a given customer. And the customer KPI score generation component 216 operates to generate a KPI score for each customer.

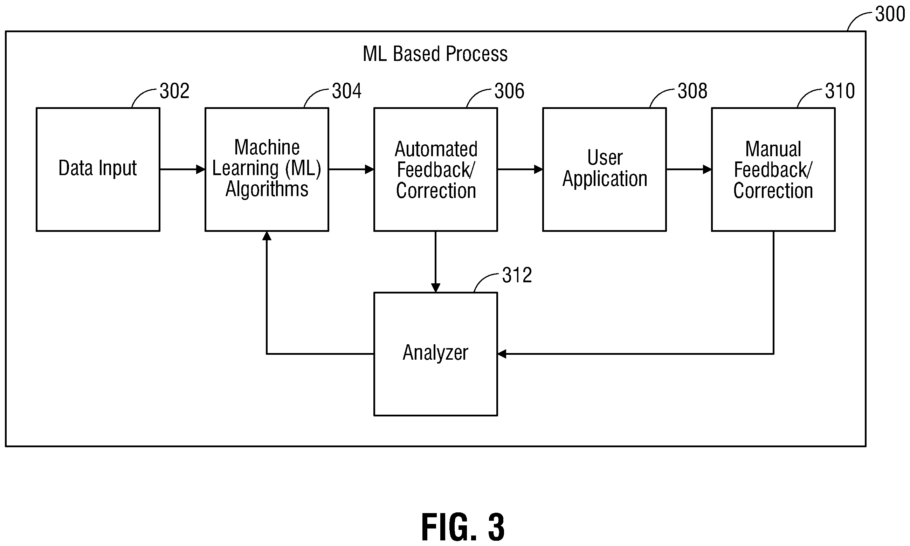

FIG. 3 shows an exemplary ML-based process 300 that may be employed by various ML-based components of the delivery KPI analysis and alert application 210, including the ML-based customer cluster creation component 212 and the ML-based key driver derivation component 214. In general, the ML-based process 300 may be employed by any component that requires some form of machine learning to analyze data and detect or recognize patterns in the data. In the example shown, the ML-based process 300 includes a data input component 302, one or more ML models or algorithms 304, an automated feedback/correction component 306, a user application 308, a manual feedback/correction component 310, and an analyzer 312. Examples of algorithms that may be used with the ML-based process 300 include K-Means Clustering, Random Forest, Correlational Analysis, Natural Language Processing, and the like.

In operation, the data input component 302 receives data (e.g., customer ratings, customer NSSoD scores, customer survey responses, delivery KPI data, etc.) and, after appropriate pre-processing, feeds the data to the one or more ML models 304. The ML models 304 use machine learning and neural network processing techniques to extract relevant features from the data in accordance with training data used to develop the models. The automated feedback/-correction component 306 applies rules and algorithms configured to detect errors in the output received from ML models 304. These errors are used to auto correct the model output and are fed back to the ML models 304 via the analyzer 312 to update the processing of the ML models 304. The processed output from automated feedback/correction component 306 is then displayed to a user for validation via the user application 308. The corrections made by the user are captured by the manual feedback/correction component 310 and fed back into the ML models 304 via the analyzer 312. This allows the ML models 304 to continuously improve evaluation and extraction of relevant features from the input data.

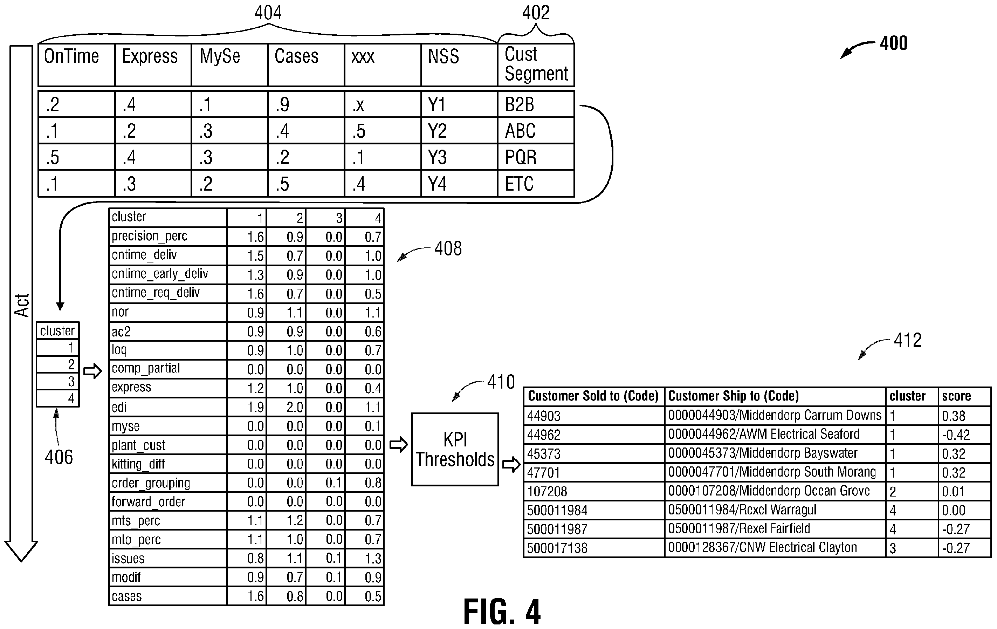

Referring next to FIG. 4, an exemplary flow diagram 400 is shown that graphically illustrates at a high level the process embodied by the delivery KPI analysis and alert application 210. As will be discussed, the process uses data analytics and machine learning techniques to provide insights that can help prioritize KPI related actionable items and thereby increase the likelihood of improving NSSoD scores.

As an initial step, customers are divided into segments based on various market factors, such as business type, product type, service type, and the like, in a manner known to those skilled in the art. Illustrative customer segments are indicated at 402 and may include B2B companies, B2C companies, wholesale and retail distributors, general contractors and subcontractors, panel builders, OEMs, system integrators, end users, and the like. Delivery KPI data for each customer segment is indicated at 404 and may be stored, for example, in the delivery KPI database 106. The segment delivery KPI data reflects an average KPI for each customer in the segment.

Next, the delivery KPI analysis and alert application 210, via the ML-based customer cluster creation component 212 thereof, groups the segment level customers 402 into clusters based on similarities in their delivery experience. For purposes herein, each customer belongs to a single cluster. The delivery experience refers to the delivery related services provided to the customers, as reflected by the delivery KPI data for the customer. The grouping or clustering may be performed, for instance, by applying K-Means Clustering or similar ML algorithms to the delivery KPI data for the customers. In general, K-Means Clustering uses vector quantization techniques to partition $n$ observations into k clusters in which each observation belongs to the cluster with the nearest mean. In the example of FIG. 4, the customer cluster creation component 212 has grouped the customers in the B2B segment into four clusters, Clusters 1-4, indicated at 406. The average KPI values for each of the clusters is shown at 408, with the leftmost column listing the individual KPIs that make up the delivery KPI data for the clusters in this example. The clustering has the effect of grouping together customers that share similar delivery experience.

Once clustering is performed, the delivery KPI analysis and alert application 210, via the ML-based key driver derivation component 214 thereof, derives the importance of the individual KPIs to the cluster. The key driver derivation component 214 may perform the derivation of the importance for each KPI by applying, for instance, Random Forest or similar ML algorithms to the delivery KPI data for the customers in the cluster, and the NSSoD scores provided by the customers. The Random Forest algorithm basically combines the outputs of multiple decision trees to reach a single result. In this way, the Random Forest algorithm can process the delivery KPI data against the NSSoD scores to find a relationship between the delivery KPI data and the NSSoD scores. In some embodiments, the importance of each KPI to the cluster is given in percentages such that the various KPI importance values add up to 1.0 (or 100%). In some embodiments, a predefined alternative numerical range may be used instead of 100% to indicate the importance of each KPI, which range may be selected as needed for a particular implementation.

As part of the importance derivation process, the key driver derivation component 214 accounts for the impact that a trend in KPI values may have on NSSoD score. For example, the key driver derivation component 214 may find that an increasing trend in "Number of Reschedules (NoR)" tends to have a negative correlation or a negative impact on the customer NSSoD. In contrast, the key driver derivation component 214 may find that a similar increasing trend in "On-Time at Customer Door" tends to have a positive correlation or a positive impact on the customer NSSoD. In some embodiments, the key driver derivation component 214 may use Correlational Analysis or similar ML algorithms to determine the negative or positive impact of a given KPI trend on the NSSOD. Correlational Analysis is commonly employed to identify any dependency that may exist between two variables. In the present example, Correlational Analysis can be used to analyze historical data for each KPI against past NSSoD scores to determine whether an increase or decrease in a particular KPI has a positive or negative impact on the NSSoD.

In some embodiments, whether a particular KPI has a positive or negative impact on NSSoD can be captured using an exemplary variable called Logic. The exemplary Logic variable may be assigned a value of -1 for a particular KPI if the impact of the KPI on NSSoD is negative, a value of +1 for the KPI if the impact of the KPI on NSSoD is positive, and a value of 0 if the impact is neutral.

Thereafter, the delivery KPI analysis and alert application 210, via the customer KPI score generation component 216 thereof, calculates a KPI score for each customer and a customer score (also called a customer perception score) for each customer in a given cluster. In some embodiments, the score generation component 216 generates the KPI score for each customer on a one-month basis. For the present month, the score generation component 216 uses the average KPI percentages of the previous 12 months for the entire cluster and the actual KPI percentage for the present month for each customer in that cluster. Thus, if only half of all deliveries for the present month were delivered on time for a particular customer, then "On-time Delivery" would be 50 percent (or 0.5) for that customer. The difference between the 12-month percentage and the present month percentage is then calculated and compared against a KPI threshold range, generally indicated at 410. In some embodiments, the KPI threshold range may be selected as 1.5 times the standard deviation of the past 12 months of data collected for a respective KPI, as follows:

$$\text{KPI Percentage Difference} = \text{Historical average of KPI for previous 12 months} - \quad (1)$$

$$\text{Present value of KPI for present month}$$

$$\text{KPI Threshold Range} = -1.5 * \text{Std Dev to} +1.5 * \text{Std Dev} \quad (2)$$

In the foregoing, if the calculated KPI percentage difference is within the KPI threshold range, a value of 0 is assigned to the Logic variable, whereas if the KPI percentage difference is found to be above or below the KPI threshold range, a value of +1 or -1, respectively, is assigned to the Logic variable, as follows:

$$\text{If KPI Percentage Difference is} < \text{Negative KPI Threshold, then Logic} = -1 \quad (3)$$

$$\text{If KPI Percentage Difference is} > \text{Positive KPI Threshold, then Logic} = +1 \quad (4)$$

$$\text{If KPI Percentage Difference within KPI Threshold Range, then Logic} = 0 \quad (5)$$

The customer KPI score generation component 216 may then calculate the customer scores, generally indicated at 412 (where the rightmost column shows the customer KPI scores), using the KPI scores, as follows:

$$\text{KPI Score} = \text{Logic} * \text{KPI Importance} \quad (6)$$

$$\text{Customer Score} = (\text{Sum of KPI Scores}) / (\text{Sum of KPI Importance}) \quad (7)$$

In the above calculations, the value of KPI Importance is determined by the ML-based key driver derivation component 214 using the Random Forest algorithm, as described earlier. The foregoing approach provides users with an assessment of how a specific customer reacts to the delivery experience, and how important different KPIs are to that customer.

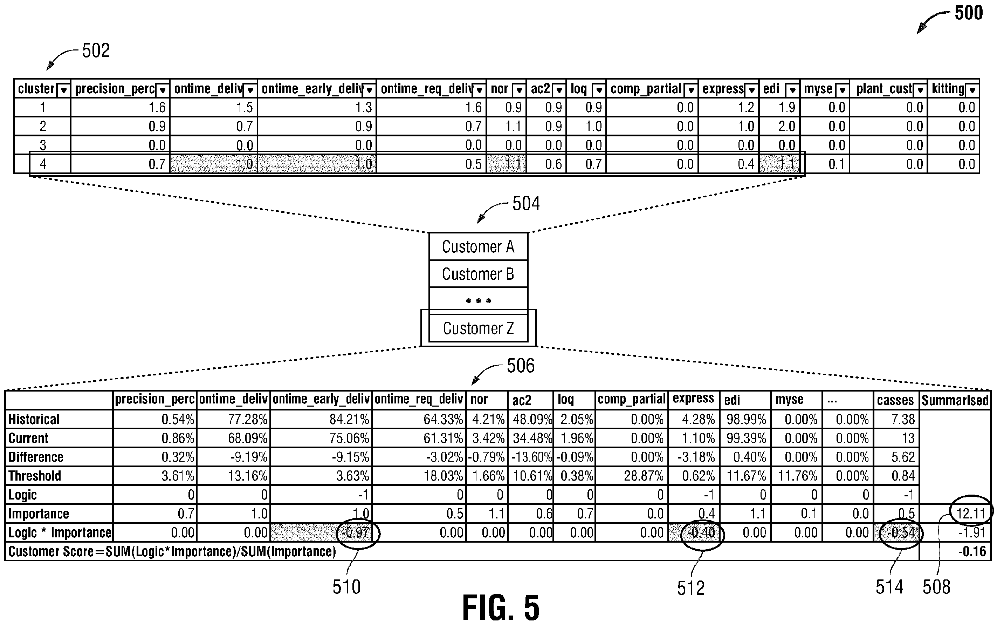

FIG. 5 shows exemplary results 500 produced by the delivery KPI analysis and alert application 210 operating as described above based on an exemplary set of customer feedback data and an exemplary set of delivery KPI data for a predefined set of KPIs. In this example, customers in the B2B segment have been clustered into four clusters, Clusters 1-4, as indicated at 502. The customers in each of the clusters reacted similarly to one another with respect to their delivery experience, as reflected by the KPI data, such that certain KPIs have similar importance to the customers in each cluster. For example, for Cluster 1 customers, precision delivery (1.6), On-time Delivery (1.5), On-time + Early Deliveries (1.6), Express (1.2), and EDI (1.9) had the highest importance, whereas for Cluster 2 customers, NoR (1.1) and EDI (2.0) had the highest importance, but Precision Delivery, On-time Delivery, and On-Time + Early Deliveries had less importance compared to Cluster 1 customers, while for Cluster 3 customers, no KPIs had particularly high importance, and for Cluster 4 customers, On-time Delivery (1.0), On-time + Early Deliveries (1.0), NoR (1.1) and EDI (1.1) had the highest importance.

In the FIG. 5 example, the customers making up Cluster 4 include Customers A to Z, generally indicated at 504. The results for one of these customers, Customer Z, is broken out in detail at 506. These results include historical data for 12 months of KPIs for Customers A to Z ("Historical" row), current month of KPI data for Customer Z ("Current" row), difference between the first and second rows ("Difference" row), value of threshold range ("Threshold" row), value of Logic variable ("Logic" row), KPI importance value (Importance row), KPI score ("Logic * Importance" row), and customer score ("Customer Score" row). The results show that for Customer Z, the KPIs with the highest importance are On-time Delivery (1.0), On-time + Early Deliveries (1.0), NoR (1.1) and EDI (1.1), as indicated by the data in the Importance row. The total importance of all delivery KPIs for Customer Z is 12.11, as indicated at 508.

In addition, it can be seen that three of the delivery KPIs, On-time + Early Deliveries, Express Delivery, and number of Customer Care Cases, have a Logic variable value of -1, as shown in the Logic row. This means that those three KPIs had a negative impact on NSSoD for Customer Z. The remaining delivery KPIs have a Logic variable value of 0, which means that those KPIs had a neutral impact on NSSoD for Customer Z. Calculating the KPI score for the three negative KPIs as indicated above in Equation (6) produces KPI scores of -0.97, -0.40, and -0.54, respectively, as indicated at 510, 512, and 514. The customer score may then be calculated using the KPI scores as indicated above in Equation (7), resulting in a customer score of -0.16 (or -16 percent). This means that the three negative KPIs above reduced the likelihood by 16 percent that Customer Z will improve its NSSoD rating based on its most recent delivery experience. A user may then take appropriate corrective action upon being notified or otherwise made aware of the three negative KPIs for Customer Z.

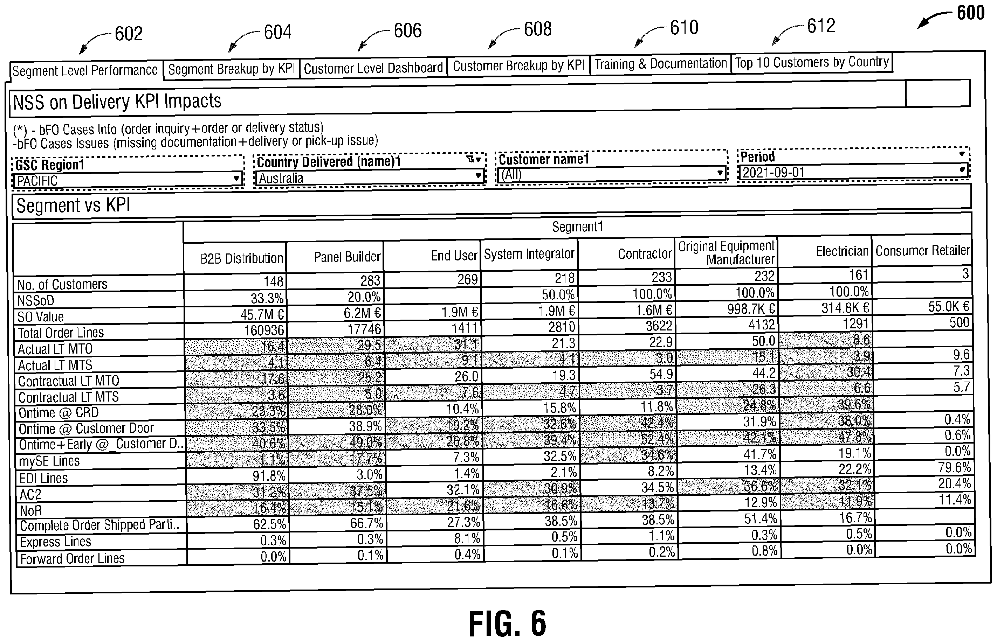

FIG. 6 shows an exemplary dashboard 600 that may be used to notify or otherwise make a user aware of KPI scores, customer scores, and other aspects of the embodiments discussed herein. Such a dashboard 600 may be displayed on any suitable display, such as a laptop, tablet, mobile device and the like. In some embodiments, the dashboard 600 may comprise a plurality of interactive screens that allow a user to not only view data and discern insight, but also filter the data according to various filters, such as by cluster, segment, country, customer, and the like, among other functionality. The scores may also be color coded according to the score values, such that a negative score may be displayed in an appropriate shade of red, whereas a positive score may be displayed in an appropriate shade of green.

In the present embodiment, the dashboard 600 has several tabs across the top of the screen, each tab representing a different dashboard screen designed to provide different types of information. For example, there is a segment level performance tab 602, a segment breakup by KPI tab 604, a customer level dashboard tab 606, a customer breakup by KPI tab 608, a training and documentation tab 610, and a top 10 customers by country tab 612. The user may use the tabs 602-612 to select an appropriate screen based on the desired information.

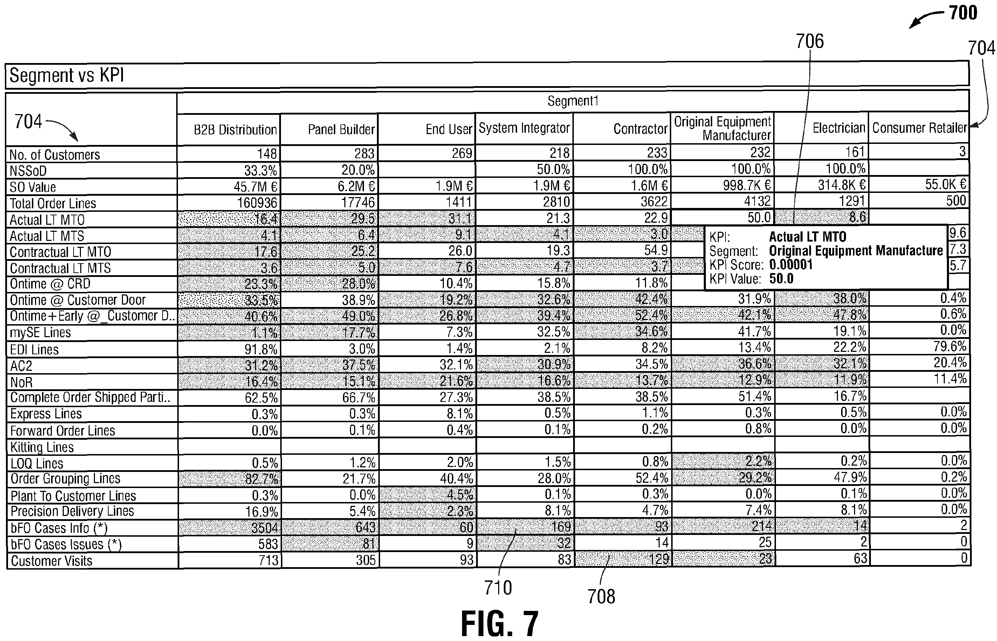

FIG. 7 shows an exemplary segment level performance screen 700 that may be selected via the segment level performance tab 602. This dashboard screen 700 is in the form of a table, with columns 702 representing the segment level customers, while rows 704 represent number of customers, NSSoD, and delivery KPIs. Each cell in the dashboard screen 700 provides the user with KPI data for a particular KPI and a particular segment. The user may also hover a cursor over or otherwise select one of the cells to display a pop-up window 706 containing more detailed information about the segment and the KPI, such as the segment identifier, KPI score for the segment and KPI value for the segment. In addition, each cell may be filled with a different color to represent the impact of the KPI for that cell. For example, cell 708 may have a green color to indicate that the data in the cell reflects good KPI performance, whereas cell 710 may have a red color to indicate that the data in the cell reflects poor KPI performance. Different shades of green or red may be used to indicate different degrees of good or poor KPI performance. A gray color or similar neutral color may be used to indicate a neutral KPI performance.

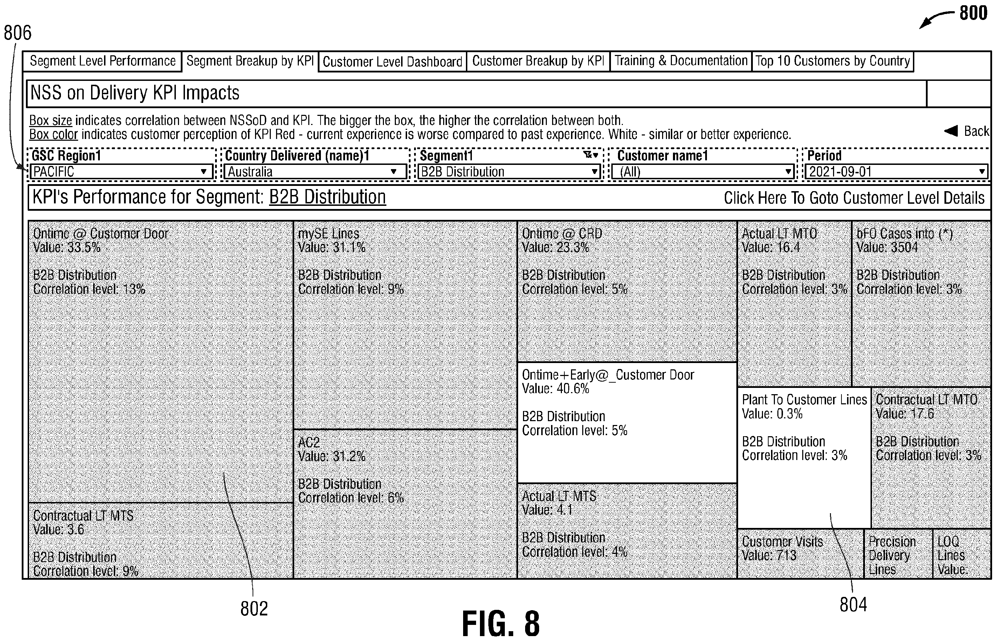

FIG. 8 shows an exemplary segment breakup by KPI screen 800 that may be selected via the segment breakup by KPI tab 604. This dashboard screen 800 is in the form of a Box Tree Map with boxes that contain KPI data for a specific segment, in this case a B2B customer segment called "B2B Distribution." Each box, one of which is indicated at 802, displays data for a particular KPI of that segment. The size of each box also reflects the KPI importance and impact of the KPI for that segment, with bigger boxes reflecting greater KPI importance and impact, and vice versa. Thus, for example, box 802 is larger than box 804, which means the KPI represented by box 802 has greater importance and impact compared to the KPI represented by box 804. In addition, a different color, such as green or red (or shades thereof), may be used to indicate whether a box reflects good, poor, or neutral KPI performance. In the example shown, box 802 has a red color that reflects poor KPI performance, while box 804 has a gray color that reflects neutral KPI performance. In addition, one or more data filters, generally indicated at 806, may be provided to allow a user to filter the data, for example, by customer segment, country, region, customer name, and time period. The data filters may be in the form of a drop-down list of filter options from which the user may select.

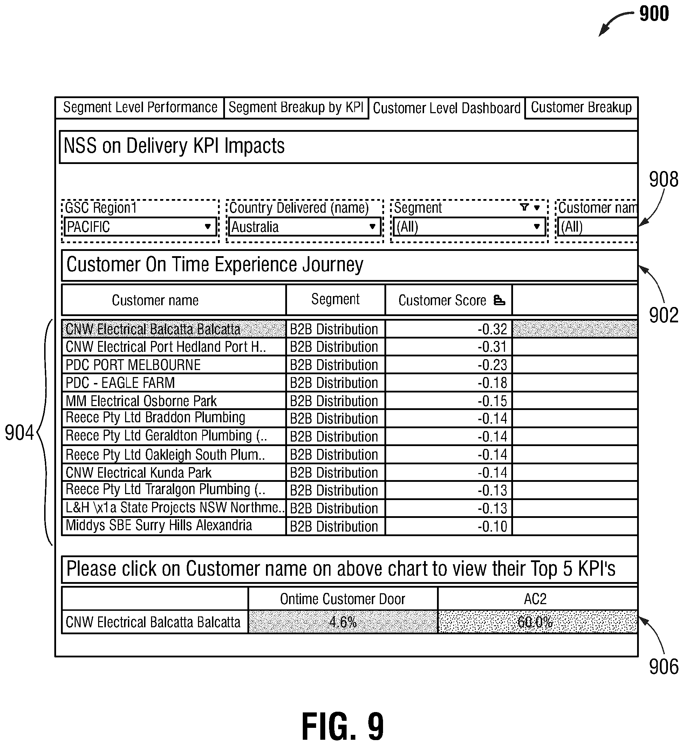

FIG. 9 shows an exemplary customer level dashboard screen 900 that may be selected via the customer level dashboard tab 606. This dashboard screen 900 is also in the form of a table, with columns 902 representing the segment level customers ("Customer name" column), the segment to which they belong ("Segment" column), and the customer score ("Customer Score" column), while rows 904 contain the information and data for each column. Selecting one of the customers in the customer name column brings up and displays the top 5 KPIs for that customer, indicated generally at 906. In some embodiments, one or more data filters in the form of a drop-down list, generally indicated at 908, may also be provided to allow a user to filter the data, for example, by customer segment, country, region, customer name, and time period.

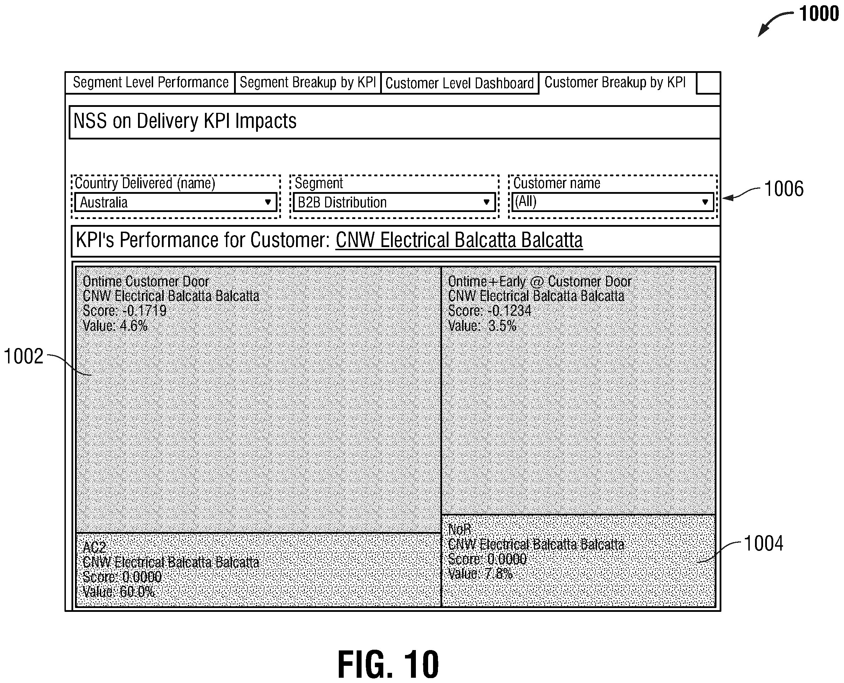

FIG. 10 shows an exemplary customer breakup by KPI screen 1000 that may be selected via the customer breakup by KPI tab 608. This dashboard screen 1000, like the dashboard screen 800, is in the form of a Box Tree Map with boxes that contain KPI data for a specific customer, in this case a customer called "CNW Electrical Balcatta Balcatta." Each box 1002 again displays data for a particular KPI for that customer. The size of each box again reflects the KPI importance and impact of the KPI for that customer, with bigger boxes reflecting greater KPI importance and impact, and vice versa. Thus, for example, box 1002 is larger than box 1004, which means the KPI represented by box 1002 has greater importance and impact compared to the KPI represented by box 1004. And as before, a different color, such as green or red (or shades thereof), may be used to indicate whether a box reflects good, poor, or neutral KPI performance. In the example shown, box 1002 has a red color that reflects poor KPI performance, while box 1004 has a green color that reflects good KPI performance. In addition, one or more data filters 1006 may be provided in the form of a drop-down list to allow a user to filter the data, for example, by customer segment, country, region, customer name, and time period.

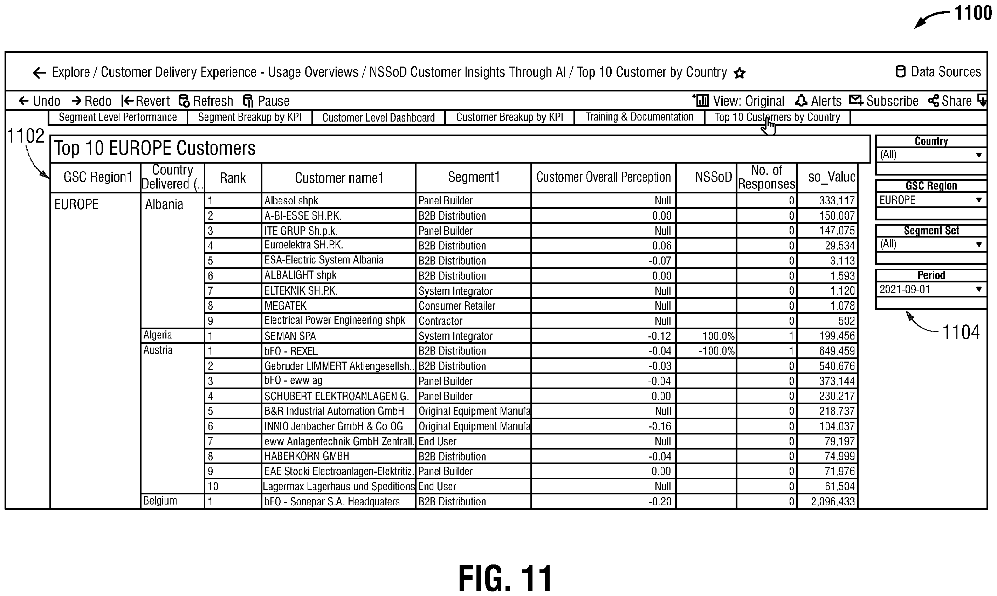

FIG. 11 shows an exemplary top 10 customers by country screen 1100 that may be selected via the top 10 customers by country tab 612. This dashboard screen 1100, as the name suggests, provides a list of the top 10 customers sorted according to the countries where customer deliveries were made. The customers are listed in several columns, generally indicated at 1102, including a column for geographical region, country delivered, customer ranking, customer name, customer segment, customer overall perception (i.e., customer score), and SS, number of responses, and sales order value. In some embodiments, one or more data filters 1104 may be provided in the form of a drop-down list to allow a user to filter the data, for example, by country, region, segment, and time period.

Thus far, a number of specific embodiments have been shown and described for the delivery KPI analysis and alert system 102 and the application 210 thereof. Following now is a description of a general method that may be used by or with the analysis and alert system 102 and the application 210 thereof.

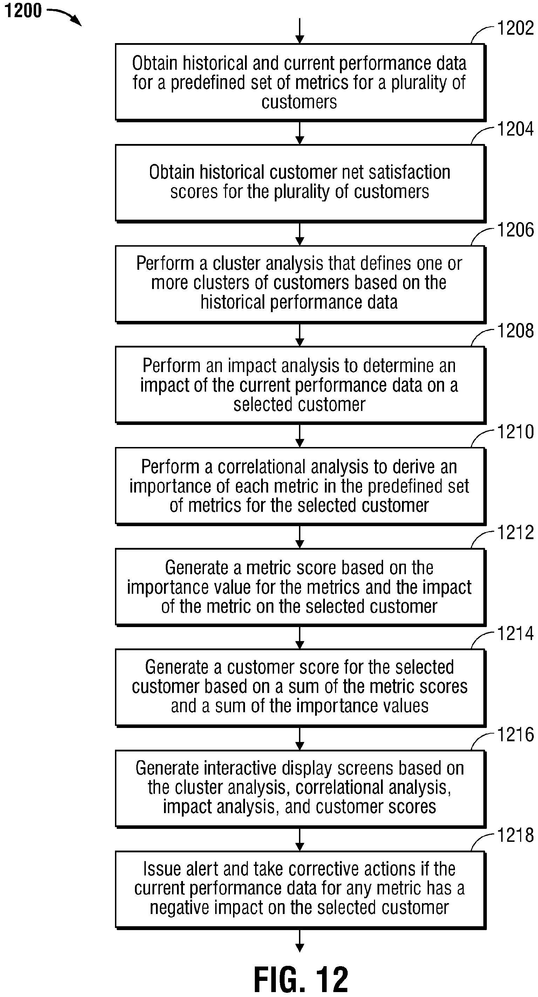

Referring to FIG. 12, a flowchart 1200 is shown representing a method that may be used by or with the delivery KPI analysis and alert system 102 and the application 210 thereof. The method generally begins at block 1202 performance data is obtained for a predefined set of metrics for a plurality of customers. The performance data includes historical performance data (e.g., 12 months) for the predefined set of metrics and current performance data (e.g., current month) for the predefined set of metrics. In some embodiments, the predefined set of metrics may be a predefined set of delivery KPIs, although alternative performance metrics may be used.

At block 1204, customer net satisfaction scores for the plurality of customers may be obtained. In some embodiments, the net satisfaction scores may be historical (e.g., 12 months) NSSoD scores fort the plurality of customers.

At block 1206, a cluster analysis is performed based on the historical performance data for the predefined set of metrics. The cluster analysis groups customers into clusters based on the similarity of their experiences, as reflected by the historical performance data for the predefined set of metrics. In some embodiments, the cluster analysis is performed using K-Means clustering or similar ML-based algorithms. In some embodiments, each customer belongs to a single cluster, and clustering is performed on a customer segment basis, such that customers from different segments are not mixed together.

At block 1208, an impact analysis is performed using the historical performance data for the predefined set of metrics and the current performance data for the predefined set of metrics for a selected customer. The impact analysis determines whether each metric in the predefined set of metrics has a negative impact, a positive impact, or a neutral impact on the selected customer. In some embodiments, the impact analysis may be performed using Equations (1) - (5) above.

At block 1210, a correlational analysis is performed using the historical performance data for the predefined set of metrics and the customer net satisfaction scores. The correlational analysis provides an importance value of each metric in the predefined set of metrics for the selected customer.

At block 1212, a metric score generated for each metric in the predefined set of metrics based on the importance value for the metric and the impact of the metric on the selected customer. In some embodiments, the metric score may be generated using Equation (6) above.

At block 1214, a customer score is generated for the selected customer based on a sum of metric scores for the predefined set of metrics and a sum of importance values for the predefined set of metrics. The customer score provides an indication of a likelihood that the selected customer will increase or decrease its net satisfaction score based on the current performance data for the predefined set of metrics. In some embodiments, the customer score may be generated using Equation (7) above.

At block 1216, one or more interactive display screens are generated based on the cluster analysis, the correlational analysis, the impact analysis, and the customer scores. The one or more interactive display screens allows a user to selectively display a result of the cluster analysis, the correlational analysis, the impact analysis, and/or the customer scores. In some embodiments, the one or more interactive display screens displays the impact analysis using boxes having different colors and/or different sizes.

At block 1218, an alert may be issued and corrective actions may be taken if the current performance data for any metric indicates a negative impact on the selected customer. In some embodiments, corrective actions may include locking out certain user privileges with respect to the selected customer, such as access to the customer's account, or disabling order entry for the customer, until a user take steps to clear an alert flag for the customer.

While a number of embodiments have been disclosed and described herein, it is to be understood that the above description is intended to be illustrative, and not restrictive. Many other implementation examples are apparent upon reading and understanding the above description and modifications and variations may be made within the scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

**Claims**

1. A system for improving customer satisfaction, comprising:

   a processor;
   a display unit coupled to the processor; and
   a storage unit accessible by the processor, the storage unit storing an application thereon that, when executed by the processor, causes the system to:

   obtain performance data for a predefined set of metrics for a plurality of customers, the performance data including historical performance data for the predefined set of metrics and current performance data for the predefined set of metrics;
   perform an impact analysis using the historical performance data for the predefined set of metrics for the plurality of customers and current performance data for the predefined set of metrics for a selected customer, the impact analysis determining whether each metric in the predefined set of metrics has a negative impact, a positive impact, or a neutral impact on the selected customer; and
   perform a corrective action related to the selected customer in response to a determination that the metric has a negative impact on the selected customer.

2. The system of claim 1, wherein the plurality of customers constitutes a cluster of customers, the cluster of customers being selected from several clusters of customers, each cluster of customers being defined by the application causing the system to perform a cluster analysis based on the historical performance data for the predefined set of metrics.

3. The system of claim 2, wherein the application further causes the system to:

   obtain historical customer net satisfaction scores for the plurality of customers, each net satisfaction score having a value within a predefined range of values; and
   perform a correlational analysis using the historical performance data for the predefined set of metrics and the customer net satisfaction scores, the correlational analysis providing an importance value of each metric in the predefined set of metrics.

4. The system of claim 3, wherein the application further causes the system to generate a metric score for each metric in the predefined set of metrics based on the importance value for the metric and the impact of the metric on the selected customer.

**5.** The system of claim 4, wherein the application further causes the system to generate a customer score for the selected customer based on a sum of metric scores for the predefined set of metrics and a sum of importance values for the predefined set of metrics, the customer score providing an indication of a likelihood that the selected customer will increase or decrease its net satisfaction score based on the current performance data for the predefined set of metrics.

**6.** The system of claim 5, wherein the application further causes the system to generate one or more interactive display screens based on the cluster analysis, the correlational analysis, the impact analysis, and the customer scores, the one or more interactive display screens allowing a user to selectively display a result of the cluster analysis, the correlational analysis, the impact analysis, and/or the customer scores.

**7.** The system of claim 6, wherein the one or more interactive display screens displays the impact analysis using boxes having different colors and/or different sizes.

**8.** A method for improving customer satisfaction, comprising:

obtaining performance data for a predefined set of metrics for a plurality of customers, the performance data including historical performance data for the predefined set of metrics and current performance data for the predefined set of metrics;
performing an impact analysis using the historical performance data for the predefined set of metrics for the plurality of customers and current performance data for the predefined set of metrics for a selected customer, the impact analysis determining whether each metric in the predefined set of metrics has a negative impact, a positive impact, or a neutral impact on the selected customer; and
performing a corrective action related to the selected customer in response to a determination that the metric has a negative impact on the selected customer.

**9.** The method of claim 8, wherein the plurality of customers constitutes a cluster of customers, the cluster of customers being selected from several clusters of customers, each cluster of customers being defined by performing a cluster analysis based on the historical performance data for the predefined set of metrics.

**10.** The method of claim 9, further comprising:

obtaining historical customer net satisfaction scores for the plurality of customers, each net satisfaction score having a value within a predefined range of values; and
performing a correlational analysis using the historical performance data for the predefined set of metrics and the customer net satisfaction scores, the correlational analysis providing an importance value of each metric in the predefined set of metrics.

**11.** The method of claim 10, further comprising generating a metric score for each metric in the predefined set of metrics based on the importance value for the metric and the impact of the metric on the selected customer.

**12.** The method of claim 11, further comprising generating a customer score for the selected customer based on a sum of metric scores for the predefined set of metrics and a sum of importance values for the predefined set of metrics, the customer score providing an indication of a likelihood that the selected customer will increase or decrease its net satisfaction score based on the current performance data for the predefined set of metrics.

**13.** The method of claim 12, further comprising generating one or more interactive display screens based on the cluster analysis, the correlational analysis, the impact analysis, and the customer scores, the one or more interactive display screens allowing a user to selectively display a result of the cluster analysis, the correlational analysis, the impact analysis, and/or the customer scores.

**14.** The method of claim 13, further comprising displaying the impact analysis on the one or more interactive display screens displays using boxes having different colors and/or different sizes.

**15.** A computer-readable medium storing computer-readable instructions for causing a processor to:

obtain performance data for a predefined set of metrics for a plurality of customers, the performance data including historical performance data for the predefined set of metrics and current performance data for the predefined set of metrics;

perform an impact analysis using the historical performance data for the predefined set of metrics for the plurality of customers and current performance data for the predefined set of metrics for a selected customer, the impact analysis determining whether each metric in the predefined set of metrics has a negative impact, a positive impact, or a neutral impact on the selected customer; and

perform a corrective action related to the selected customer in response to a determination that the metric has a negative impact on the selected customer.

16. The computer-readable medium of claim 15, wherein the plurality of customers constitutes a cluster of customers, the cluster of customers being selected from several clusters of customers, each cluster of customers being defined by the computer-readable instructions causing the processor to perform a cluster analysis based on the historical performance data for the predefined set of metrics.

17. The computer-readable medium of claim 16, wherein the computer-readable instructions further cause the processor to:

obtain historical customer net satisfaction scores for the plurality of customers, each net satisfaction score having a value within a predefined range of values; and

perform a correlational analysis using the historical performance data for the predefined set of metrics and the customer net satisfaction scores, the correlational analysis providing an importance value of each metric in the predefined set of metrics.

18. The computer-readable medium of claim 17, wherein the computer-readable instructions further cause the processor to generate a metric score for each metric in the predefined set of metrics based on the importance value for the metric and the impact of the metric on the selected customer.

19. The computer-readable medium of claim 18, wherein the computer-readable instructions further cause the processor to generate a customer score for the selected customer based on a sum of metric scores for the predefined set of metrics and a sum of importance values for the predefined set of metrics, the customer score providing an indication of a likelihood that the selected customer will increase or decrease its net satisfaction score based on the current performance data for the predefined set of metrics.

20. The computer-readable medium of claim 19, wherein the computer-readable instructions further cause the processor to generate one or more interactive display screens based on the cluster analysis, the correlational analysis, the impact analysis, and the customer scores, the one or more interactive display screens allowing a user to selectively display a result of the cluster analysis, the correlational analysis, the impact analysis, and/or the customer scores.

**100**

Customer A — 114

Customer B

Customer x

Customer Feedback Data — 104

KPI 1 — 116

KPI 2

KPI n

Delivery KPI Analysis & Alert System — 102

Delivery KPI Data — 106

ML and Data Storage Resources — 108

Alert Messages — 112

User — 110

Alert Messages — 112

User — 110

# FIG. 1

Customer
Survey Data →

Delivery
KPI Data →

**Delivery KPI Analysis & Alert System** — 102

- 200 — Processor(s)
- 202 — Network Interface
- 204 — User Interface
- 206 — Display

- 208 — Storage
  - 210 — Delivery KPI Analysis & Alert Application
    - 212 — ML Based Customer Cluster Creation
    - 214 — ML Based Key Driver Derivation
    - 216 — Customer KPI Score Generation

← → ML and Data Storage Resources

# FIG. 2

**FIG. 3**

EP 4 600 889 A1

EP 4 600 889 A1

400

| | 404 | | | | | 402 |
| OnTime | Express | MySe | Cases | xxx | NSS | Cust Segment |
|---|---|---|---|---|---|---|
| .2 | .4 | .1 | .9 | .x | Y1 | B2B |
| .1 | .2 | .3 | .4 | .5 | Y2 | ABC |
| .5 | .4 | .3 | .2 | .1 | Y3 | PQR |
| .1 | .3 | .2 | .5 | .4 | Y4 | ETC |

Act

| cluster |
|---|
| 1 |
| 2 |
| 3 |
| 4 |

406

408

| cluster | 1 | 2 | 3 | 4 |
|---|---|---|---|---|
| precision_perc | 1.6 | 0.9 | 0.0 | 0.7 |
| ontime_deliv | 1.5 | 0.7 | 0.0 | 1.0 |
| ontime_early_deliv | 1.3 | 0.9 | 0.0 | 1.0 |
| ontime_req_deliv | 1.6 | 0.7 | 0.0 | 0.5 |
| nor | 0.9 | 1.1 | 0.0 | 1.1 |
| ac2 | 0.9 | 0.9 | 0.0 | 0.6 |
| loq | 0.9 | 1.0 | 0.0 | 0.7 |
| comp_partial | 0.0 | 0.0 | 0.0 | 0.0 |
| express | 1.2 | 1.0 | 0.0 | 0.4 |
| edi | 1.9 | 2.0 | 0.0 | 1.1 |
| myse | 0.0 | 0.0 | 0.0 | 0.1 |
| plant_cust | 0.0 | 0.0 | 0.0 | 0.0 |
| kitting_diff | 0.0 | 0.0 | 0.0 | 0.0 |
| order_grouping | 0.0 | 0.0 | 0.1 | 0.8 |
| forward_order | 0.0 | 0.0 | 0.0 | 0.0 |
| mts_perc | 1.1 | 1.2 | 0.0 | 0.7 |
| mto_perc | 1.1 | 1.0 | 0.0 | 0.7 |
| issues | 0.8 | 1.1 | 0.1 | 1.3 |
| modif | 0.9 | 0.7 | 0.1 | 0.9 |
| cases | 1.6 | 0.8 | 0.0 | 0.5 |

410

KPI Thresholds

412

| Customer Sold to (Code) | Customer Ship to (Code) | cluster | score |
|---|---|---|---|
| 44903 | 0000044903/Middendorp Carrum Downs | 1 | 0.38 |
| 44962 | 0000044962/AWM Electrical Seaford | 1 | -0.42 |
| 45373 | 0000045373/Middendorp Bayswater | 1 | 0.32 |
| 47701 | 0000047701/Middendorp South Morang | 1 | 0.32 |
| 107208 | 0000107208/Middendorp Ocean Grove | 2 | 0.01 |
| 500011984 | 0500011984/Rexel Warragul | 4 | 0.00 |
| 500011987 | 0500011987/Rexel Fairfield | 4 | -0.27 |
| 500017138 | 0000128367/CNW Electrical Clayton | 3 | -0.27 |

**FIG. 4**

EP 4 600 889 A1

**500**

**502**

| cluster | precision_perc | ontime_deliv | ontime_early_deliv | ontime_req_deliv | nor | ac2 | loq | comp_partial | express | edi | myse | plant_cust | kitting |
|---|---|---|---|---|---|---|---|---|---|---|---|---|---|
| 1 | 1.6 | 1.5 | 1.3 | 1.6 | 0.9 | 0.9 | 0.9 | 0.0 | 1.2 | 1.9 | 0.0 | 0.0 | 0.0 |
| 2 | 0.9 | 0.7 | 0.9 | 0.7 | 1.1 | 0.9 | 1.0 | 0.0 | 1.0 | 2.0 | 0.0 | 0.0 | 0.0 |
| 3 | 0.0 | 0.0 | 0.0 | 0.0 | 0.0 | 0.0 | 0.0 | 0.0 | 0.0 | 0.0 | 0.0 | 0.0 | 0.0 |
| 4 | 0.7 | 1.0 | 1.0 | 0.5 | 1.1 | 0.6 | 0.7 | 0.0 | 0.4 | 1.1 | 0.1 | 0.0 | 0.0 |

**504**

Customer A

Customer B

• • •

Customer Z

**506**

| | precision_perc | ontime_deliv | ontime_early_deliv | ontime_req_deliv | nor | ac2 | loq | comp_partial | express | edi | myse | ... | casses | Summarised |
|---|---|---|---|---|---|---|---|---|---|---|---|---|---|---|
| Historical | 0.54% | 77.28% | 84.21% | 64.33% | 4.21% | 48.09% | 2.05% | 0.00% | 4.28% | 98.99% | 0.00% | 0.00% | 7.38 | |
| Current | 0.86% | 68.09% | 75.06% | 61.31% | 3.42% | 34.48% | 1.96% | 0.00% | 1.10% | 99.39% | 0.00% | 0.00% | 13 | |
| Difference | 0.32% | -9.19% | -9.15% | -3.02% | -0.79% | -13.60% | -0.09% | 0.00% | -3.18% | 0.40% | 0.00% | 0.00% | 5.62 | |
| Threshold | 3.61% | 13.16% | 3.63% | 18.03% | 1.66% | 10.61% | 0.38% | 28.87% | 0.62% | 11.67% | 11.76% | 0.00% | 0.84 | |
| Logic | 0 | 0 | -1 | 0 | 0 | 0 | 0 | 0 | -1 | 0 | 0 | 0 | -1 | |
| Importance | 0.7 | 1.0 | 1.0 | 0.5 | 1.1 | 0.6 | 0.7 | 0.0 | 0.4 | 1.1 | 0.1 | 0.0 | 0.5 | 12.11 |
| Logic * Importance | 0.00 | 0.00 | -0.97 | 0.00 | 0.00 | 0.00 | 0.00 | 0.00 | -0.40 | 0.00 | 0.00 | 0.00 | -0.54 | -1.91 |
| Customer Score=SUM(Logic*Importance)/SUM(Importance) | | | | | | | | | | | | | | -0.16 |

510

512

514   508

**FIG. 5**

EP 4 600 889 A1

| Segment Level Performance | Segment Breakup by KPI | Customer Level Dashboard | Customer Breakup by KPI | Training & Documentation | Top 10 Customers by Country |

## NSS on Delivery KPI Impacts

(*) - bFO Cases Info (order inquiry+order or delivery status)
-bFO Cases Issues (missing documentation+delivery or pick-up issue)

| GSC Region1 | Country Delivered (name)1 | Customer name1 | Period |
|---|---|---|---|
| PACIFIC | Australia | (All) | 2021-09-01 |

### Segment vs KPI

| | Segment1 | | | | | | | |
|---|---|---|---|---|---|---|---|---|
| | B2B Distribution | Panel Builder | End User | System Integrator | Contractor | Original Equipment Manufacturer | Electrician | Consumer Retailer |
| No. of Customers | 148 | 283 | 269 | 218 | 233 | 232 | 161 | 3 |
| NSSoD | 33.3% | 20.0% | | 50.0% | 100.0% | 100.0% | 100.0% | |
| SO Value | 45.7M € | 6.2M € | 1.9M € | 1.9M € | 1.6M € | 998.7K € | 314.8K € | 55.0K € |
| Total Order Lines | 160936 | 17746 | 1411 | 2810 | 3622 | 4132 | 1291 | 500 |
| Actual LT MTO | 16.4 | 29.5 | 31.1 | 21.3 | 22.9 | 50.0 | 8.6 | |
| Actual LT MTS | 4.1 | 6.4 | 9.1 | 4.1 | 3.0 | 15.1 | 3.9 | 9.6 |
| Contractual LT MTO | 17.6 | 25.2 | 26.0 | 19.3 | 54.9 | 44.2 | 30.4 | 7.3 |
| Contractual LT MTS | 3.6 | 5.0 | 7.6 | 4.7 | 3.7 | 26.3 | 6.6 | 5.7 |
| Ontime @ CRD | 23.3% | 28.0% | 10.4% | 15.8% | 11.8% | 24.8% | 39.6% | |
| Ontime @ Customer Door | 33.5% | 38.9% | 19.2% | 32.6% | 42.4% | 31.9% | 38.0% | 0.4% |
| Ontime+Early @ Customer D.. | 40.6% | 49.0% | 26.8% | 39.4% | 52.4% | 42.1% | 47.8% | 0.6% |
| mySE Lines | 1.1% | 17.7% | 7.3% | 32.5% | 34.6% | 41.7% | 19.1% | 0.0% |
| EDI Lines | 91.8% | 3.0% | 1.4% | 2.1% | 8.2% | 13.4% | 22.2% | 79.6% |
| AC2 | 31.2% | 37.5% | 32.1% | 30.9% | 34.5% | 36.6% | 32.1% | 20.4% |
| NoR | 16.4% | 15.1% | 21.6% | 16.6% | 13.7% | 12.9% | 11.9% | 11.4% |
| Complete Order Shipped Parti.. | 62.5% | 66.7% | 27.3% | 38.5% | 38.5% | 51.4% | 16.7% | |
| Express Lines | 0.3% | 0.3% | 8.1% | 0.5% | 1.1% | 0.3% | 0.5% | 0.0% |
| Forward Order Lines | 0.0% | 0.1% | 0.4% | 0.1% | 0.2% | 0.8% | 0.0% | 0.0% |

**FIG. 6**

**700**

**706**

**704**

| Segment vs KPI | | | | | | | | |
|---|---|---|---|---|---|---|---|---|
| | Segment1 | | | | | | | |
| 704 | B2B Distribution | Panel Builder | End User | System Integrator | Contractor | Original Equipment Manufacturer | Electrician | Consumer Retailer |
| No. of Customers | 148 | 283 | 269 | 218 | 233 | 232 | 161 | 3 |
| NSSoD | 33.3% | 20.0% | | 50.0% | 100.0% | 100.0% | 100.0% | |
| SO Value | 45.7M € | 6.2M € | 1.9M € | 1.9M € | 1.6M € | 998.7K € | 314.8K € | 55.0K € |
| Total Order Lines | 160936 | 17746 | 1411 | 2810 | 3622 | 4132 | 1291 | 500 |
| Actual LT MTO | 16.4 | 29.5 | 31.1 | 21.3 | 22.9 | 50.0 | 8.6 | |
| Actual LT MTS | 4.1 | 6.4 | 9.1 | 4.1 | 3.0 | | | 9.6 |
| Contractual LT MTO | 17.6 | 25.2 | 26.0 | 19.3 | 54.9 | | | 7.3 |
| Contractual LT MTS | 3.6 | 5.0 | 7.6 | 4.7 | 3.7 | | | 5.7 |
| Ontime @ CRD | 23.3% | 28.0% | 10.4% | 15.8% | 11.8% | | | |
| Ontime @ Customer Door | 33.5% | 38.9% | 19.2% | 32.6% | 42.4% | 31.9% | 38.0% | 0.4% |
| Ontime+Early @_Customer D.. | 40.6% | 49.0% | 26.8% | 39.4% | 52.4% | 42.1% | 47.8% | 0.6% |
| mySE Lines | 1.1% | 17.7% | 7.3% | 32.5% | 34.6% | 41.7% | 19.1% | 0.0% |
| EDI Lines | 91.8% | 3.0% | 1.4% | 2.1% | 8.2% | 13.4% | 22.2% | 79.6% |
| AC2 | 31.2% | 37.5% | 32.1% | 30.9% | 34.5% | 36.6% | 32.1% | 20.4% |
| NoR | 16.4% | 15.1% | 21.6% | 16.6% | 13.7% | 12.9% | 11.9% | 11.4% |
| Complete Order Shipped Parti.. | 62.5% | 66.7% | 27.3% | 38.5% | 38.5% | 51.4% | 16.7% | |
| Express Lines | 0.3% | 0.3% | 8.1% | 0.5% | 1.1% | 0.3% | 0.5% | 0.0% |
| Forward Order Lines | 0.0% | 0.1% | 0.4% | 0.1% | 0.2% | 0.8% | 0.0% | 0.0% |
| Kitting Lines | | | | | | | | |
| LOQ Lines | 0.5% | 1.2% | 2.0% | 1.5% | 0.8% | 2.2% | 0.2% | 0.0% |
| Order Grouping Lines | 82.7% | 21.7% | 40.4% | 28.0% | 52.4% | 29.2% | 47.9% | 0.2% |
| Plant To Customer Lines | 0.3% | 0.0% | 4.5% | 0.1% | 0.3% | 0.0% | 0.1% | 0.0% |
| Precision Delivery Lines | 16.9% | 5.4% | 2.3% | 8.1% | 4.7% | 7.4% | 8.1% | 0.0% |
| bFO Cases Info (*) | 3504 | 643 | 60 | 169 | 93 | 214 | 14 | 2 |
| bFO Cases Issues (*) | 583 | 81 | 9 | 32 | 14 | 25 | 2 | 0 |
| Customer Visits | 713 | 305 | 93 | 83 | 129 | 23 | 63 | 0 |

KPI: **Actual LT MTO**
Segment: **Original Equipment Manufacture**
KPI Score: **0.00001**
KPI Value: **50.0**

710

708

**FIG. 7**

EP 4 600 889 A1

FIG. 8

**800**

806

| Segment Level Performance | Segment Breakup by KPI | Customer Level Dashboard | Customer Breakup by KPI | Training & Documentation | Top 10 Customers by Country |

## NSS on Delivery KPI Impacts

Box size indicates correlation between NSSoD and KPI. The bigger the box, the higher the correlation between both.
Box color indicates customer perception of KPI Red - current experience is worse compared to past experience. White - similar or better experience.    ◀ Back

| GSC Region1 | Country Delivered (name)1 | Segment1 | Customer name1 | Period |
|---|---|---|---|---|
| PACIFIC ▼ | Australia ▼ | B2B Distribution ▼ | (All) ▼ | 2021-09-01 ▼ |

### KPI's Performance for Segment: B2B Distribution                    Click Here To Goto Customer Level Details

Ontime @ Customer Door
Value: 33.5%

B2B Distribution
Correlation level: 13%

Contractual LT MTS
Value: 3.6

B2B Distribution
Correlation level: 9%

mySE Lines
Value: 31.1%

B2B Distribution
Correlation level: 9%

AC2
Value: 31.2%

B2B Distribution
Correlation level: 6%

Ontime @ CRD
Value: 23.3%

B2B Distribution
Correlation level: 5%

Ontime+Early@_Customer Door
Value: 40.6%

B2B Distribution
Correlation level: 5%

Actual LT MTS
Value: 4.1

B2B Distribution
Correlation level: 4%

Actual LT MTO
Value: 16.4

B2B Distribution
Correlation level: 3%

bFO Cases into (*)
Value: 3504

B2B Distribution
Correlation level: 3%

Plant To Customer Lines
Value: 0.3%

B2B Distribution
Correlation level: 3%

Contractual LT MTO
Value: 17.6

B2B Distribution
Correlation level: 3%

Customer Visits
Value: 713

Precision Delivery Lines

LOQ Lines
Value:

802

804

EP 4 600 889 A1

**900**

| Segment Level Performance | Segment Breakup by KPI | Customer Level Dashboard | Customer Breakup |
|---|---|---|---|

## NSS on Delivery KPI Impacts

**908**

| GSC Region1 | Country Delivered (name) | Segment ▼ | Customer nam |
|---|---|---|---|
| PACIFIC ▼ | Australia ▼ | (All) ▼ | (All) |

### Customer On Time Experience Journey

**902**

| Customer name | Segment | Customer Score | |
|---|---|---|---|
| CNW Electrical Balcatta Balcatta | B2B Distribution | -0.32 | |
| CNW Electrical Port Hedland Port H.. | B2B Distribution | -0.31 | |
| PDC PORT MELBOURNE | B2B Distribution | -0.23 | |
| PDC - EAGLE FARM | B2B Distribution | -0.18 | |
| MM Electrical Osborne Park | B2B Distribution | -0.15 | |
| Reece Pty Ltd Braddon Plumbing | B2B Distribution | -0.14 | |
| Reece Pty Ltd Geraldton Plumbing (.. | B2B Distribution | -0.14 | |
| Reece Pty Ltd Oakleigh South Plum.. | B2B Distribution | -0.14 | |
| CNW Electrical Kunda Park | B2B Distribution | -0.14 | |
| Reece Pty Ltd Traralgon Plumbing (.. | B2B Distribution | -0.13 | |
| L&H \x1a State Projects NSW Northme.. | B2B Distribution | -0.13 | |
| Middys SBE Surry Hills Alexandria | B2B Distribution | -0.10 | |

**904**

### Please click on Customer name on above chart to view their Top 5 KPI's

| | Ontime Customer Door | AC2 |
|---|---|---|
| CNW Electrical Balcatta Balcatta | 4.6% | 60.0% |

**906**

# FIG. 9

EP 4 600 889 A1

| Segment Level Performance | Segment Breakup by KPI | Customer Level Dashboard | Customer Breakup by KPI | |
|---|---|---|---|---|

**NSS on Delivery KPI Impacts**

| Country Delivered (name) | Segment | Customer name |
|---|---|---|
| Australia ▼ | B2B Distribution ▼ | (All) ▼ |

— 1006

**KPI's Performance for Customer: <u>CNW Electrical Balcatta Balcatta</u>**

Ontime Customer Door
CNW Electrical Balcatta Balcatta
Score: -0.1719
Value: 4.6%

Ontime+Early @ Customer Door
CNW Electrical Balcatta Balcatta
Score: -0.1234
Value: 3.5%

1002

AC2
CNW Electrical Balcatta Balcatta
Score: 0.0000
Value: 60.0%

NoR
CNW Electrical Balcatta Balcatta
Score: 0.0000
Value: 7.8%

— 1004

**FIG. 10**

← Explore / Customer Delivery Experience - Usage Overviews / NSSoD Customer Insights Through AI / Top 10 Customer by Country ☆     🗄 Data Sources

← Undo   → Redo   I←Revert   🗘 Refresh   🖩 Pause                    📊 View: Original   🔔 Alerts   ✉ Subscribe   ⦂ Share

| Segment Level Performance | Segment Breakup by KPI | Customer Level Dashboard | Customer Breakup by KPI | Training & Documentation | Top 10 Customers by Country | |

## Top 10 EUROPE Customers

**Country**
(All) ▼

**GSC Region**
EUROPE ▼

**Segment Set**
(All) ▼

**Period**
2021-09-01 ▼

| GSC Region1 | Country Delivered (..) | Rank | Customer name1 | Segment1 | Customer Overall Perception | NSSoD | No. of Responses | so_Value |
|---|---|---|---|---|---|---|---|---|
| EUROPE | Albania | 1 | Albesol shpk | Panel Builder | Null | | 0 | 333.117 |
| | | 2 | A-BI-ESSE SH.P.K. | B2B Distribution | 0.00 | | 0 | 150.007 |
| | | 3 | ITE GRUP Sh.p.k. | Panel Builder | Null | | 0 | 147.075 |
| | | 4 | Euroelektra SH.P.K. | B2B Distribution | 0.06 | | 0 | 29.534 |
| | | 5 | ESA-Electric System Albania | B2B Distribution | -0.07 | | 0 | 3.113 |
| | | 6 | ALBALIGHT shpk | B2B Distribution | 0.00 | | 0 | 1.593 |
| | | 7 | ELTEKNIK SH.P.K. | System Integrator | Null | | 0 | 1.120 |
| | | 8 | MEGATEK | Consumer Retailer | Null | | 0 | 1.078 |
| | | 9 | Electrical Power Engineering shpk | Contractor | Null | | 0 | 502 |
| | Algeria | 1 | SEMAN SPA | System Integrator | -0.12 | 100.0% | 1 | 199.456 |
| | Austria | 1 | bFO - REXEL | B2B Distribution | -0.04 | -100.0% | 1 | 649.459 |
| | | 2 | Gebruder LIMMERT Aktiengesellsh.. | B2B Distribution | -0.03 | | 0 | 540.676 |
| | | 3 | bFO - eww ag | Panel Builder | -0.04 | | 0 | 373.144 |
| | | 4 | SCHUBERT ELEKTROANLAGEN G. | Panel Builder | 0.00 | | 0 | 230.217 |
| | | 5 | B&R Industrial Automation GmbH | Original Equipment Manufa | Null | | 0 | 218.737 |
| | | 6 | INNIO Jenbacher GmbH & Co OG | Original Equipment Manufa | -0.16 | | 0 | 104.037 |
| | | 7 | eww Anlagentechnik GmbH Zentrall. | End User | Null | | 0 | 79.197 |
| | | 8 | HABERKORN GMBH | B2B Distribution | -0.04 | | 0 | 74.999 |
| | | 9 | EAE Stocki Electroanlagen-Elektritiz. | Panel Builder | 0.00 | | 0 | 71.976 |
| | | 10 | Lagermax Lagerhaus und Speditions | End User | Null | | 0 | 61.504 |
| | Belgium | 1 | bFO - Sonepar S.A. Headquaters | B2B Distribution | -0.20 | | 0 | 2,096.433 |

1100

1102

1104

## FIG. 11

1200

**1202**
Obtain historical and current performance data for a predefined set of metrics for a plurality of customers

**1204**
Obtain historical customer net satisfaction scores for the plurality of customers

**1206**
Perform a cluster analysis that defines one or more clusters of customers based on the historical performance data

**1208**
Perform an impact analysis to determine an impact of the current performance data on a selected customer

**1210**
Perform a correlational analysis to derive an importance of each metric in the predefined set of metrics for the selected customer

**1212**
Generate a metric score based on the importance value for the metrics and the impact of the metric on the selected customer

**1214**
Generate a customer score for the selected customer based on a sum of the metric scores and a sum of the importance values

**1216**
Generate interactive display screens based on the cluster analysis, correlational analysis, impact analysis, and customer scores

**1218**
Issue alert and take corrective actions if the current performance data for any metric has a negative impact on the selected customer

**FIG. 12**

## EUROPEAN SEARCH REPORT

**Application Number**

EP 25 15 1402

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/245022 A1 (BHATTACHARYA GAURAV [US] ET AL) 3 August 2023 (2023-08-03)<br>* paragraphs [0025], [0028], [0031] - [0037] *<br>* paragraphs [0040] - [0051], [0060] *<br>* paragraphs [0086] - [0088], [0090], [0092], [0093] *<br>- - - - - | 1-20 | INV.<br>G06Q30/0201<br>G06Q30/016<br>G06Q30/01 |
| A | US 2023/058543 A1 (GRAF PETER [US] ET AL) 23 February 2023 (2023-02-23)<br>* paragraphs [0003], [0027], [0028] *<br>* paragraphs [0059] - [0063] *<br>* paragraphs [0073] - [0087], [0090] *<br>* paragraphs [0117] - [0119], [0133], [0137], [0138] *<br>- - - - - | 1-20 | |

**TECHNICAL FIELDS SEARCHED (IPC)**

G06Q

The present search report has been drawn up for all claims

| Place of search | Date of completion of the search | Examiner |
|---|---|---|
| The Hague | 17 April 2025 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 15 1402

This annex lists the patent family members relating to the patent documents cited in the above-mentioned European search report.
The members are as contained in the European Patent Office EDP file on
The European Patent Office is in no way liable for these particulars which are merely given for the purpose of information.

17-04-2025

| Patent document cited in search report | Publication date | Patent family member(s) | Publication date |
|---|---|---|---|
| US 2023245022 A1 | 03-08-2023 | NONE | |
| US 2023058543 A1 | 23-02-2023 | EP 4388471 A1 | 26-06-2024 |
| | | US 2023058543 A1 | 23-02-2023 |

EPO FORM P0459

For more details about this annex : see Official Journal of the European Patent Office, No. 12/82